# EUROPÄISCHE PATENTSCHRIFT

(11) **EP 1 034 685 B1**
(45) Veröffentlichungstag und Bekanntmachung des Hinweises auf die Patenterteilung: **21.08.2002**
(21) Anmeldenummer: 98965072.6
(22) Anmeldetag: 13.11.1998
(51) Int. Cl.: H04Q 7/38

(54) **VERFAHREN ZUR AUTHORISIERUNG EINES ENDGERÄTEANSCHLUSSES EINES TELEKOMMUNIKATIONSNETZES**
METHOD FOR AUTHORIZING THE CONNECTION OF A TERMINAL OF A TELECOMMUNICATIONS NETWORK
PROCEDE POUR AUTORISER UNE CONNEXION DE TERMINAL D'UN RESEAU DE TELECOMMUNICATIONS

(30) Priorität: 28.11.1997 DE 19752970
(43) Veröffentlichungstag der Anmeldung: 13.09.2000
(73) Patentinhaber: SIEMENS AKTIENGESELLSCHAFT, 80333 München (DE)
(72) Erfinder: BECHER, Reinhard, D-81245 München (DE)
(86) Internationale Anmeldenummer: DE9803340
(87) Internationale Veröffentlichungsnummer: WO99029131

(56) Entgegenhaltungen:
- WO-A-97/22221
- WO-A-97/28665
- WO-A-97/42783
- US-A- 5 301 223

## Beschreibung

Die Erfindung betrifft ein Verfahren zur Authorisierung eines Endgeräteanschlusses eines Telekommunikationsnetzes, welches eine Steuerstation zur Durchführung von Verwaltungsdiensten aufweist, wobei
a)der Anschluß in dem Telekommunikationsnetz für die Authorisierung bereitgestellt wird,
b)ein Endgerät über den Anschluß mit dem Telekommunikationsnetz eine Verbindung zu der Steuerstation aufnimmt und
c)der Steuerstation mittels des Endgerätes Informationen für die Anschlußanmeldung gesendet werden.

Für den Erwerb eines Mobilteils, insbesondere eines GSM-Endgerätes, ist es für den Teilnehmer, d.h. den Käufer und späteren Benutzer des Mobilteils, bisher gewöhnlich erforderlich und in vielen Ländern sogar vorgeschrieben, seine Identität, z.B. Name und Wohnort, und Bonität anzugeben. Aus diesen Gründen muß sich der Teilnehmer gegenüber dem Vertreiber des Mobilteils ausweisen und/oder bei dem Vertreiber einen Anmeldeantrag mit den persönlichen Daten ausfüllen. Der Vertreiber trägt dann diese Daten in eine Verwaltungsstation des Betreibers des Mobilfunknetzes ein, wofür er sich über ein Terminal mit dem entsprechenden Dienst der Verwaltungsstation in Verbindung setzen muß. Aufgrund dieser Daten kann ein Mobilanschluß eingerichtet und schließlich freigeschaltet werden. Im Rahmen der Erfindungsbeschreibung wird unter Endgeräteanschluß oder kurz Anschluß die Gesamtheit der technischen Voraussetzungen verstanden, die für das ordnungsgemäße Herstellen von Verbindungen von/zu einem bestimmten Endgerät in einem Telekommunikationsnetz benötigt werden und für ein Endgerät spezifisch sind, einschließlich der hierfür gespeicherten Daten, z.B. in einem Heimatregister eines Mobilfunknetzes.

Bonität bezeichnet hier die Zahlungsfähigkeit des Teilnehmers im Hinblick auf die mit dem Betreiber des Telekommunikationsnetzes vereinbarte Zahlungsart, z.B. über ein Bankkonto mit Abbuchungsauftrag. Die Kriterien, nach welchen die Bonität bestimmt wird, sollte zwischen dem Netzbetreiber und dem betreffenden Bankinstitut festgelegt sein. Bonität kann beispielsweise dann vorliegen, wenn der Teilnehmer bei einer Bank über ein Girokonto, z.B. ein Gehaltskonto, verfügt, welches nicht gesperrt ist bzw. dessen Kreditrahmen nicht ausgeschöpft ist. Alternativ dazu kann auch eine nicht gesperrte Kreditkarte die Bonität des Teilnehmers belegen. Derartige Überprüfungen der Bonität eines Kunden sind wohlbekannt und werden bankintern regelmäßig durchgeführt, z.B. in Deutschland in Form einer sogenannten "Schufa"-Abfrage bei der Schutzgemeinschaft für allgemeine Kreditsicherung.

Bei einem bekannten Verfahren der Anmeldung eines GSM-Mobilanschlusses werden beispielsweise die Daten des Teilnehmers, wie etwa Name, Wohnort und Konto- bzw. Kreditkartennummer sowie möglicherweise ein persönliches Schlüsselwort, von dem Vertreiber zu der Verwaltungsstation des GSM-Netzes, das sogenannte ABC (Administration and Billing Center), gesendet. Das persönliche Schlüsselwort dient als Berechtigungskennung des Teilnehmers und wird von dem Teilnehmer gewählt oder seitens des Netzbetreibers vergeben. Das ABC speichert die Daten, ordnet ihnen eine als Rufnummer in dem GSM-Netz fungierende sogenannte MSISDN-Rufnummer (Mobile Subscriber Integrated Service Digital Network) sowie eine als Identifikation des Mobilteiles dienende IMSI-Nummer (International Mobile Subscriber Identification) zu und veranlaßt ein Heimatregister des GSM-Netzes, einen Anschluß für die MSISDN-Nummer einzurichten. Wenn das Heimatregister den Anschluß eingerichtet und unter Umständen auch freigeschaltet hat, gibt es eine diesbezügliche Meldung über das ABC an den Vertreiber. Erst jetzt erhält der Teilnehmer das Mobilteil, z.B. noch in der Geschäftsstelle des Vertreibers oder auf dem Postweg zugesandt. In vielen Fällen muß der Teilnehmer vor dem eigentlichen Gebrauch des Mobilteils noch selbst durch den Anruf einer Servicenummer mit einer Anmeldestation des GSM-Netzes in Verbindung treten und durch Eingabe des Schlüsselworts das Mobilteil bzw. den Anschluß freischalten.

Dies ist nicht nur für den Teilnehmer umständlich; der Netzbetreiber muß, insbesondere wenn er nicht selbst Vertreiber der Mobilteile ist, gegebenenfalls gemeinsam mit den Vertreibern, ein engmaschiges Vertriebsnetz unterhalten, um den adäquaten Zugang zu dem Administrationsdienst zu gewährleisten, was sehr kostenintensiv ist.

Die WO 97/22221 offenbart ein Verfahren zur Autorisierung eines Endgeräteanschlusses eines Telekommunikationsnetzes welches eine Steuerstation zur Durchführung von Verwaltungsdiensten aufweist, wobei der Anschluß in dem Telekommunikationsnetz für die Authorisierung bereitgestellt. wird, und der zu dem Anschluß gehörende Eintrag im Heimatregister (HLR) markiert wird, und ein Endgerät über den Anschluß mit dem Telekommu-nikationsnetz gesteuert durch das Heimatregister (HLR) eine Verbindung zu der Steuerstation aufnimmt und der Steuerstation mittels des Endgerätes Informationen, die für die Authorisierung des Anschlusses sowie für die spätere Verwaltung des Anschlusses seitens des Telekommunikationsnetzes erforderlich sind, für die Anschlußanmeldung gesendet werden, und die Steuerstation dann in Abhängigkeit vom Ergebnis der Überprüfung die Anmeldungsbearbeitung durchführt. Die US-A 5 301 223 offenbart, daß zur Autorisierung eines Endgeräteanschlusses eines Telekommunikationsnetzes eine Steuerstation die eingegebenen Informationen bezüglich der Bonität bei einer außerhalb des Telekommunikationsnetzes befindlichen Datenbank überprüft und den Anschluß gegebenenfalls freigebt.

Es ist Aufgabe der Erfindung, es dem Benutzer eines Telekommunikationsendgerätes, insbesondere eines Mobilteils wie ein sogenanntes GSM-Handy, zu ermöglichen, die Anmeldung und Registrierung eines Anschlusses für das Endgerät vollständig von dem betreffenden Endgerät aus durchzuführen. Insbesondere soll für den Teilnehmer die Notwendigkeit entfallen, etwa noch vor dem Erhalt des Endgerätes, bei der Verkaufsstelle oder einer anderen Registrierstelle beispielsweise persönliche Daten angeben zu müssen. Stattdessen ist es wünschenswert, falls am Endgerät noch vor dessen Erstinbetriebnahme Konfigurationsarbeiten des Endgerätes bzw. des Anschlusses vorgenommen werden müssen, daß diese im voraus von dem Vertreiber oder Hersteller des Endgerätes ohne die Mitwirkung des zukünftigen Benutzers durchzuführen sind.

Diese Aufgabe wird durch ein Verfahren nach Anspruch 1 gelöst.

Diese Lösung erbringt den Vorteil, daß der Anmeldevorgang nun direkt über die betroffenen Endgeräte anstelle von zusätzlich vorgesehenen Terminals abläuft und zusätzlich Verwaltungsaufwand eingespart wird, wie z.B. der Arbeitsgang der Dateneingabe bei der Verwaltungsstation. Darüber hinaus ist das erfindungsgemäße Verfahren für den Teilnehmer ebenso wie für den Vertreiber einfacher und übersichtlicher, und verringert zudem die Fehleranfälligkeit, da der Teilnehmer nun über eine unmittelbare Kontrollmöglichkeit verfügt.

In einer bevorzugten Ausführungsform der Erfindung ist das Telekommunikationsnetz als Mobilfunknetz, insbesondere GSM-Netz, und der Anschluß als Verbindungsmöglichkeit über eine Luftfunkstrecke des Mobilfunknetzes ausgebildet. Gerade bei Mobilgeräten ist es für den Teilnehmer besonders attraktiv, frühzeitig nach dem Kauf des Endgerätes über einen voll betriebsfähigen Mobilanschluß zu verfügen.

Es ist weiters günstig und erbringt die Vorteile der sogenannten 'private user mobility', also der Unabhängigkeit des Teilnehmers von einem bestimmten Endgerät, wenn in einer dem Endgerät zugeordneten Benutzeridentifikation enthaltene anschlußspezifische Informationen gesendet werden.

Aus Gründen des Datenschutzes ist es weiters vorteilhaft, wenn die in Schritt c) des eingangs genannten Verfahrens gesendeten Informationen zumindest zum Teil für die Übertragung verschlüsselt werden.

Es ist darüber hinaus günstig, wenn die in Schritt c) gesendeten Informationen zumindest zum Teil sich auf die Identität und/oder eine Bankverbindung eines Benutzers des Anschlusses beziehen. Hierdurch entfällt insbesondere für den Teilnehmer bisher üblicher Aufwand wie etwa das Vorlegen von Dokumenten.

Ebenso günstig ist es, wenn die Steuerstation im Laufe der Anmeldungsbearbeitung mit zumindest einer vorzugsweise außerhalb des Telekommunikationsnetzes befindlichen Datenbank in Verbindung tritt, um die Gültigkeit der gesendeten Informationen zu überprüfen. Dadurch ist eine rasche Informationsverarbeitung gesichert und etwaige Eingabefehler können sofort korrigiert werden.

Es ist weiters vorteilhaft, wenn für die Abfrage der Informationen ein Dialog zwischen der Steuerstation und dem Endgerät bzw. einem Benutzer des Endgerätes erfolgt. Dies erhöht nicht nur den Bedienkomfort des Benutzers sondern steigert auch die Fehlersicherheit der abgefragten Daten.

In einer bevorzugten Ausführungsform der Erfindung wird Schritt b) durch die Eingabe einer beliebigen Rufnummer auf dem Endgerät ausgelöst. Dadurch entfällt die Notwendigkeit, daß der Teilnehmer eine bestimmte Servicenummer anrufen muß, die ihm hierzu eigens mitgeteilt werden muß.

In einer anderen Variante des erfindungsgemäßen Verfahrens wird dem Anschluß eine Rufnummer zugeordnet und diese über das Endgerät angezeigt. Bisher wurde für das Mobilteil bzw. dessen IMSI-Nummer bereits bei dem Bereitstellen des Anschlusses eine MSISDN-Rufnummer festgelegt. Die Verschiebung dieser Zuordnung auf einen späteren Zeitpunkt erbringt dem Telekommunikationsnetz größere Flexibilität bei der Rufnummervergabe; außerdem ermöglicht dies die Einflußnahme des Teilnehmers auf die Wahl der Rufnummer.

Es ist weiters günstig im Sinne niedriger Herstellungs- und Verwaltungskosten, wenn der Schritt a) des eingangs genannten Verfahrens unter Verwendung von für das Endgerät bzw. die Benutzeridentifikation spezifischen Informationen erfolgt und von dem Betreiber des Telekommunikationsnetzes oder dem Hersteller oder Lieferanten des Endgerätes bzw. der Benutzeridentifikation durchgeführt wird.

Darüber hinaus ist es vorteilhaft, wenn in Schritt a) das Endgerät bzw. die Benutzeridentifikation ausschließlich für von dem Endgerät abgehende Anrufe freigegeben wird. Dies schließt Fehlfunktionen, insbesondere unzulässigerweise hergestellte Verbindungen, in der Zeit zwischen der Bereitstellung und der Authorisierung des Anschlusses aus.

In einer weiteren günstigen Ausführungsvariante werden die Informationen zwischen der Steuerstation und dem Endgerät zumindest zum Teil über einen Signalisierungskanal der Verbindung ausgetauscht, was insgesamt eine Vereinfachung des Signalisierungs- und Steueraufwandes seitens des Telekommunikationsnetzes ergibt.

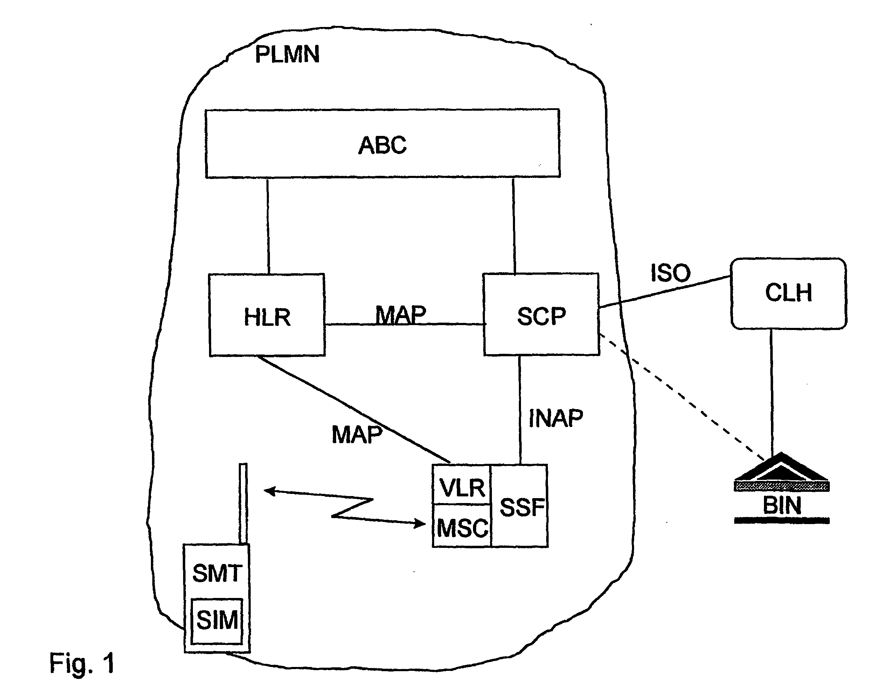

Die Erfindung wird im folgenden anhand eines Ausführungsbeispieles näher erläutert, das die Authorisierung eines GSM-Mobilteiles mit Online-Überprüfung der Bonität des Teilnehmers beschreibt. Hierzu wird auf die beigefügte Figur 1 Bezug genommen, die ein GSM-Netz und die Datenbank des Bankinstituts des Teilnehmers zeigt.

Das in Fig. 1 gezeigte GSM-Mobilteil SMT weist ein sogenanntes SIM-Modul (Subscriber Identifikation Module) in Form einer SIM-Karte zur Speicherung von Teilnehmerdaten, wie z.B. eine IMSI-Nummer oder persönliche Authorisierungskennung des Teilnehmers in Form eines PIN-Codes, auf. SIM-Karten sind aus dem GSM-Bereich wohlbekannt und dienen dazu, die erwähnten Teilnehmerdaten dem Teilnehmer unabhängig von dem verwendeten Endgerät bzw. Mobilteil SMT zur Verfügung zu stellen.

Gemäß der Erfindung wird, noch bevor der Teilnehmer das Mobilteil SMT und die SIM-Karte erwirbt, ein Anschluß im GSM-Netz vom Mobilteil-Vertreiber eingerichtet. Hierzu bedient er sich des bereits erwähnten Adminstrationsdienstes des ABC (Administration Billing Center) des GSM-Netzes. Das ABC veranlaßt ein Heimatregister des GSM-Netzes, einen Anschluß für eine MSISDN-Nummer einzurichten und diesem das Merkmal "Automatische Authorisierung" (Automatic Authorize) zuzuweisen. Dieses Merkmal sperrt den Anschluß, dem zu diesem Zeitpunkt noch kein Besitzer zugeordnet ist, für ankommende Gespräche. Weiters wird der SIM-Karte eine IMSI-Nummer vergeben.

Die SIM-Karte wird nun gemeinsam mit einem SIM-fähigen Mobilteil SMT von dem Teilnehmer erworben, wobei dies gemäß der Erfindung anonym, z.B. in einem Kaufhaus, erfolgen kann, also insbesondere ohne eine Antragsprozedur irgendwelcher Art.
Zu einem späteren, aber beliebigen Zeitpunkt schaltet der Teilnehmer das Mobilteil SMT mit eingesteckter SIM-Karte ein, und das Mobilteil SMT bucht sich nach bekannter Art mit der MSISDN-Nummer in das GSM-Netz ein. Hierzu tritt das Mobilteil bei jener Vermittlungsstelle MSC (Mobile Switching Center), in deren Einzugsbereich sich das Mobilteil MST momentan befindet, über eine Luftfunkstrecke mit einer in Fig. 1 nicht gezeigten Basisstation der Vermittlungsstelle MSC in Verbindung. Die Vermittlungsstelle MSC legt einen Eintrag in seinem Besucherverzeichnis VLR an und sendet in einem 'location update' dem Heimatregister HLR eine Einbuchungsmeldung und Aufenthaltsinformation hinsichtlich des Mobilteils MST. Das Heimatregister HLR weist die Vermittlungsstelle MSC an, entsprechend dem Anschlußmerkmal "Automatische Authorisierung", das über den Anschluß der SIM-Karte bzw. dem Mobilteil SMT zugeordnet ist, von dem Mobilteil SMT abgehende Anrufe zu der Steuerstation SCP des GSM-Netzes umzuleiten. Dadurch ist sichergestellt, daß der Teilnehmer bei einem Anrufversuch jedenfalls mit der Steuerstation SCP in Verbindung tritt.

Wenn der Teilnehmer nun über das Mobilteil SMT ein Gespräch beginnt, wird die hierzu eingegebene Rufnummer in der Vermittlungsstelle MSC zwischengespeichert und vorerst, anstelle den Teilnehmer zu dem gewünschten Anrufadressaten zu verbinden, eine Installationsverbindung (setup connection) zu der Steuerstation SCP erzeugt. Die Steuerstation SCP ruft einen Online-Identifikationsdienst auf, der nun in einen Dialog mit dem Teilnehmer tritt und die für die Etablierung des Anschlusses notwendigen Daten, also etwa Name und Wohnort des Teilnehmers, die Bankverbindung bestehend aus Bankleitzahl und Teilnehmer-Kontonummer sowie eine Transaktionsidentifikation, z.B. eine PIN-Nummer, des Teilnehmers für die Bank abfragt. Diese Daten können beispielsweise auf einer Tastatur des Mobilteils MST vom Teilnehmer eingegeben und zu der Steuerstation SCP als Wählsignale übermittelt, sowie zur Kontrolle und eventuellen Korrektur von der Steuerstation SCP zu dem Mobilteil MST gesendet und auf einer Anzeige dargestellt werden, wobei auch Ansagen in Sprachformat eingesetzt werden können. Hierzu kann, wie bei intelligenten Netzen wohlbekannt ist, die Steuerstation SCP auch Vermittlungsdienstfunktionen SSF (service switching functions) und sogenannte 'intelligent peripherals' der Vermittlungsstelle MSC nutzbar machen.

Nach der Eingabe der Daten zur Identität und Bonität des Teilnehmers überprüft die Steuerstation SCP diese Daten, wobei als erstes dem Teilnehmer eine entsprechende Ansage ausgegeben wird, die diesen auffordert, das Prüfungsergebnis abzuwarten. Die Steuerstation SCP tritt nun mit der Datenbank BIN des betreffenden Bankinstituts in Verbindung. Dies kann direkt, beispielsweise über Internet oder einem Online-Dienst, wie etwa dem in Deutschland verwendeten T-Online, Compuserve usf., erfolgen oder indirekt über eine Banken-Koordinationsstelle, einem sogenannten 'clearing house' CLH. Im Falle einer direkten Verbindung ist eine Schnittstelle zwischen der Steuerstation SCP und der Bank BIN vorgesehen. Der Bankenrechner, zu welchem die Verbindung aufgebaut werden soll, wird aufgrund der Bankleitzahl des betreffenden Bankinstituts ermittelt. Bei einer indirekten Verbindung ist eine Schnittstelle zwischen der Steuerstation SCP und dem Clearing-House CLH vorgesehen. Diese Schnittstelle kann z.B. auf dem bereits bekannten ISO-Protokoll, welches beispielsweise bereits bei Geldautomaten für die Kommunikation zwischen der Datenbank eines Bankinstituts und dem Computer des Automaten verwendet wird, beruhen. Aufgrund der Bankleitzahl verbindet das Clearing-House CLH die Steuerstation SCP mit der Datenbank BIN des betreffenden Bankinstituts.

Die Steuerstation SCP übermittelt der Bank BIN nun die Daten zusammen mit der Transaktionsidentifikation des Teilnehmers, und stellt eine Anfrage bezüglich der Bonität des Teilnehmers. Wenn die Bank BIN die Bonität des Teilnehmers bestätigt, gibt sie an die Steuerstation eine entsprechende Meldung, zusammen mit Teilnehmerdaten wie z.B. eine Abbuchungskennung, zurück. Die Steuerstation SCP beendet die Verbindung zu der Bank BIN und übermittelt die Teilnehmerdaten and das ABC, damit diese dort mit der MSISDN-Nummer verknüpft werden. Das ABC veranlaßt weiters, daß in dem Heimatregister HLR das Merkmal "Automatic Authorize" gelöscht wird und der Teilnehmer für ankommende und abgehende Anrufe freigeschaltet wird. Schließlich wird der Teilnehmer von der Steuerstation SCP über die erfolgreiche Anmeldung informiert und gefragt, ob er mit der ursprünglich gewählten, zwischengespeicherten Rufnummer verbunden werden möchte. Falls dies gewünscht ist, gibt der Teilnehmer z.B. ein bestimmtes Wählsignal, beispielsweise '0', und die Steuerstation SCP gibt der Vermittlungsstelle MSC den Teilnehmer mit dem Auftrag der Verbindungsherstellung zurück; anderenfalls wird die Verbindung des Teilnehmers beendet. Der Teilnehmer verfügt nunmehr über einen vollwertigen GSM-Mobilanschluß mit vollständig abgeschlossener Registrierung.

Stellt die Bank BIN jedoch die unzureichende Bonität des Teilnehmers fest, meldet sie dies ebenfalls der Steuerstation SCP. Wiederum beendet die Steuerstation SCP die Verbindung zu der Bank BIN und übermittelt die Teilnehmerdaten an das ABC, wo sie mit der MSISDN-Nummer verknüpft werden. Auch wird im Heimatregister HLR das Merkmal "Automatic Authorize" gelöscht, jedoch wird aufgrund der mangelhaften Bonität des Teilnehmers der Anschluß mit dem Merkmal "In Debit" gekennzeichnet. Aufgrund dieses Merkmals wird der Teilnehmer beispielsweise vollständig gesperrt, bis er eine verbesserte Bonität vorweisen kann, oder er wird on-line vergebührt, d.h. der Teilnehmer kann auf der Steuerstation SCP etwa durch den Kauf von Gutscheinen ein Guthaben lösen, das dann für eine gewisse Zahl bzw. Dauer von Gesprächen ausreicht.

Im Falle eines Fehlers, wie etwa einer ungültigen Transaktionskennung, erhält die Steuerstation SCP die Fehlermeldung der Bank und fordert den Teilnehmer zur Korrektur oder erneuten Eingabe der Daten auf, woraufhin die Bankabfrage wiederholt wird. Wenn der Teilnehmer auch beim z.B. dritten Versuch keine gültigen Daten eingibt, so veranlaßt die Steuerstation SCP die Sperrung des Mobilteils MST bzw. der SIM-Karte. Dies geschieht durch einen entsprechenden Auftrag an das ABC, das die MSISDN-Nummer und die dem SIM-Modul zugeordnete IMSI-Nummer sperrt sowie dies dem Heimatregister HLR meldet. Das Heimatregister HLR löst somit gleichfalls die Sperrung für sämtliche Anrufe aus und sendet über die Vermittlungsstelle MSC ein Sperrsignal an das Mobilteil MSC, weshalb auch die SIM-Karte selbst gesperrt wird. Durch die Sperrung ist nunmehr ein Einbuchen in das Funknetz von der SIM-Karte aus nicht mehr möglich. Dies ist notwendig, um die Signalisierungslast in dem Mobilfunknetz PLMN gering zu halten.

Wie aus dem bisher gesagten hervorgeht, setzt das Ausführungsbeispiel voraus, daß der Teilnehmer beispielsweise ein Girokonto bei einer Bank, eine Scheckkarte oder eine Kreditkarte und für diese eine Transaktions-Berechtigungsnummer besitzt. Mittels dieser Transaktionsberechtigungsnummer kann sich der Teilnehmer für die angegebenen Bankdaten als berechtigt identifizieren. Im Erfolgsfall sendet die Bank zurück, daß die Bank für den Teilnehmer die Bonität garantiert, sowie falls erforderlich Namen und Adresse des Teilnehmers.

Selbstverständlich ist das Ausführungsbeispiel ebenso mit einem Mobilgerät ausführbar, daß nicht SIM-fähig ist, sondern die entsprechenden Daten beispielsweise in einem fest eingebauten Chip-Speicher hält. Der Vorteil der Verwendung eines SIM-Moduls, liegt wie bekannt darin, daß nach dem bereits erwähnten Prinzip der 'private user mobility' der Teilnehmer nicht mehr an ein bestimmtes Endgerät gebunden ist und nach Bedarf das Endgerät je nach Bedarf und/oder Aufenthaltsort austauschen kann.

Als Alternative zu einem Mobilgerät eines Mobilnetzes, wie des GSM-Netzes, ist das erfindungsgemäße Verfahren auch für Endgeräte eines Festnetzes denkbar, insbesondere eines ISDN-Netzes, bei dem eine Dienststeuerstation SCP für die Durchführung und Steuerung von Diensten, wie etwa Anrufumleitungen, eingerichtet ist und nach der Erfindung auch mit einem Online-Identifikationsdienst ausgestattet werden kann. Beispielsweise kann ein Festanschluß eines ISDN-Netzes, an dem noch kein Endgerät angeschlossen ist, dahingehend vorbereitet werden, daß von diesem Anschluß abgehende Anrufe zu der Dienststeuerstation SCP umgeleitet werden. Wenn der Teilnehmer ein Endgerät über den Anschluß an das ISDN-Netz anschließt, kann bei dem ersten von dem Endgerät aus getätigten Anruf das erfindungsgemäße Verfahren in gleicher Weise wie oben beschrieben ablaufen.

Der oben dargestellte Dialog zwischen der Steuerstation (SCP) und dem Teilnehmer kann auch in anderer als sprachgebundener Form ablaufen. Beispielsweise können die Teilnehmerdaten über den Signalisierungskanal der Verbindung zu der Steuerstation gesendet werden, die wiederum die Eingabeaufforderungen und Meldungen in gleicher Weise zurücksendet. Die Informationen werden dem Teilnehmer z.B. auf der Anzeige des Mobilteiles (SMT) angezeigt. Ein Datenaustausch mit einer Steuerstation über den Signalisierungskanal ist z.B. über USSD (Unstructured Supplementary Service Data) nach dem CAMEL-Standard, Phase 2, des Europäischen Normeninstituts für Telekommunikation (ETSI) vorgesehen. Das Abgehen von der sprachgebundenen Form des Dialogs erübrigt beispielsweise die Einbeziehung der erwähnten Vermittlungsdienstfunktionen, und ist darüber hinaus auch dort interessant, wo eine akustische Signalübertragung nicht sinnvoll ist, z.B. aus Datenschutzgründen, etwa gegenüber Abhören des Gespräches, oder bei einer Sprech- oder Hörbehinderung des Teilnehmers.

Es ist weiters denkbar, daß insbesondere für Festnetze die Rufnummer des Teilnehmers erst bei der Anmeldung vergeben und dem Teilnehmer auf der Anzeige des Endgerätes mitgeteilt wird, anstatt wie bisher schon bei der Bereitstellung des Anschlusses festgelegt zu werden. Der Teilnehmer könnte beispielsweise seine Rufnummer selbst bestimmen oder aus einer Anzahl von Vorschlägen auswählen.

Gewöhnlich werden auch sicherheitsrelevante Daten auf der Schnittstelle zwischen einem Bankautomaten und dem Clearing-House in nicht verschlüsselter Form in dem ISO-Protokoll übertragen. Aus Datenschutzgründen empfiehlt sich jedoch eine Verschlüsselung der über Luftfunkstrecke übertragenen Daten. Günstigerweise werden die persönlichen Daten des Teilnehmers, insbesondere der PIN-Code, nur in verschlüsselter Form übermittelt, wobei z.B. ein nur dem Teilnehmer und dem Bank- bzw. Kreditkarteninstitut bekannter Schlüssel verwendet wird. Die hier verwendbaren Verschlüsselungsmethoden sind dem Fachmann bekannt, sodaß hier nicht näher auf diese Verfahren eingegangen wird.

Selbstverständlich sind noch viele andere Ausführungsformen der Erfindung denkbar. Insbesondere ist, wie bereits erwähnt, nicht auf GSM-Netze eingeschränkt, sondern allgemein auf Endgeräte für den Einsatz innerhalb Mobilfunk- sowie Festnetze und auch kombinierte Endgeräte, die in mehreren Netzen betrieben werden können, anwendbar.

## Patentansprüche

1. Verfahren zur Authorisierung eines Endgeräteanschlusses eines Telekommunikationsnetzes (PLMN), welches eine Steuerstation (SCP) zur Durchführung von Verwaltungsdiensten aufweist, wobei
a) der Anschluß in dem Telekommunikationsnetz (PLMN) für die Authorisierung bereitgestellt wird, und
b) der zu dem Anschluß gehörende Eintrag im Heimatregister (HLR) markiert wird, und
c) ein mobiles Endgerät (SMT) über den Anschluß mit dem Telekommunikationsnetz (PLMN) gesteuert durch das Heimatregister (HLR) eine Verbindung zu der Steuerstation (SCP) aufnimmt und
d) der Steuerstation (SCP) mittels des mobilen Endgerätes (SMT) Informationen, die für die Authorisierung des Anschlusses sowie für die spätere Verwaltung des Anschlusses seitens des Telekommunikationsnetzes erforderlich sind, für die Anschlußanmeldung gesendet werden,
**wobei**
e) die Steuerstation die eingegebenen Informationen bezüglich der Bonität bei einer außerhalb des Telekommunikationsnetzes (PLMN) befindlichen Datenbank (BIN) überprüft und
f) die Markierung des zu dem Anschluß gehörenden Eintrags im Heimatregister (HLR) entfernt wird, und
g) die Steuerstation (SCP) dann in Abhängigkeit vom Ergebnis der Überprüfung die Anmeldungsbearbeitung durchführt,
**dadurch gekennzeichnet, dass**
noch bevor der Teilnehmer das mobile Endgerät (SMT) und eine SIM-Karte erwirbt, der Anschluß im GSM-Netz vom Mobilteil-Vertreiber eingerichtet wird und
daß das Heimatregister (HLR) eine Vermittlungsstelle MSC anweist von dem mobilen Endgerät (SMT) abgehende Anrufe zu der Steuerstation (SCP) des GSM-Netzes umzuleiten.

2. Verfahren nach Anspruch 1,
**dadurch gekennzeichnet, daß** das Telekommunikationsnetz (PLMN) als Mobilfunknetz und der Anschluß als Verbindungsmöglichkeit über eine Luftfunkstrecke des Mobilfunknetzes ausgebildet ist.

3. Verfahren nach Anspruch 1 oder 2,
**dadurch gekennzeichnet, daß** in einer dem Endgerät (SMT) zugeordneten Benutzeridentifikation (SIM) enthaltene anschlußspezifische Informationen gesendet werden.

4. Verfahren nach einem der Ansprüche 1 bis 3,
**dadurch gekennzeichnet, daß** die in Schritt c) gesendeten Informationen zumindest zum Teil für die Übertragung verschlüsselt werden.

5. Verfahren nach einem der Ansprüche 1 bis 4,
**dadurch gekennzeichnet, daß** die in Schritt c) gesendeten Informationen zumindest zum Teil sich auf die Identität und/oder eine Bankverbindung eines Benutzers des Anschlusses beziehen.

6. Verfahren nach einem der Ansprüche 1 bis 5,
**dadurch gekennzeichnet, daß** in Schritt c) die Informationen in einem Dialog zwischen der Steuerstation (SCP) und dem Endgerät (SMT) bzw. einem Benutzer des Endgerätes (SMT) abgefragt werden.

7. Verfahren nach einem der Ansprüche 1 bis 6,
**dadurch gekennzeichnet, daß** Schritt b) durch die Eingabe einer beliebigen Rufnummer auf dem Endgerät (SMT) ausgelöst wird.

8. Verfahren nach einem der Ansprüche 1 bis 7,
**dadurch gekennzeichnet, daß** dem Anschluß eine Rufnummer zugeordnet und diese über das Endgerät (SMT) angezeigt wird.

9. Verfahren nach einem der Ansprüche 1 bis 8,
**dadurch gekennzeichnet, daß** der Schritt a) unter Verwendung von für das Endgerät (SMT) bzw. die Benutzeridentifikation (SIM) spezifischen Informationen erfolgt und von dem Betreiber des Telekommunikationsnetzes oder dem Hersteller oder Lieferanten des Endgerätes (SMT) bzw. der Benutzeridentifikation durchgeführt wird.

10. Verfahren nach einem der Ansprüche 1 bis 9,
**dadurch gekennzeichnet, daß** in Schritt a) das Endgerät (SMT) bzw. die Benutzeridentifikation (SIM) ausschließlich für von dem Endgerät abgehende Anrufe freigegeben wird.

11. Verfahren nach einem der Ansprüche 1 bis 10,
**dadurch gekennzeichnet, daß** die Informationen zwischen der Steuerstation (SCP) und dem Endgerät (SMT) zumindest zum Teil über einen Signalisierungskanal der Verbindung ausgetauscht werden.

## Claims

1. A process for authorizing access of a terminal device to a telecommunications network (PLMN) which comprises a control station (SCP) for implementing administrative services, wherein
a) access to the telecommunications network (PLMN) is provided for the authorization, and
b) the entry in the home location register (HLR) pertaining to the access is marked, and
c) a mobile terminal device (SMT) sets up a connection to the control station (SCP) via the access to the telecommunications network (PLMN), controlled by the home location register (HLR) and
d) information for the application for access that is necessary for the authorization of the access and also for the subsequent administration of the access by the telecommunications network are sent to the control station (SCP) by means of the mobile terminal device (SMT),
wherein
e) the control station checks the input information with respect to credit solvency with a database (BIN) located outside the telecommunications network (PLMN) and
f) the marking of the entry in the home location register (HLR) pertaining to the access is removed, and
g) the control station (SCP) then carries out the processing of the application, depending on the result of the check,
**characterised in that**
before the subscriber acquires the mobile terminal device (SMT) and a SIM card, access to the GSM network is established by the vendor of the mobile unit and
the home location register (HLR) instructs a switching centre MSC to divert outgoing calls from the mobile terminal device (SMT) to the control station (SCP) of the GSM network.

2. Process according to Claim 1,
**characterised in that** the telecommunications network (PLMN) takes the form of a mobile-radio network and the access takes the form of a connection option via an air gap of the mobile-radio network.

3. Process according to Claim 1 or 2,
**characterised in that** access-specific information is sent which is contained in a user identification module (SIM) assigned to the terminal device (SMT).

4. Process according to one of Claims 1 to 3,
**characterised in that** the information sent in step c) is at least in part encrypted for the transmission.

5. Process according to one of Claims 1 to 4,
**characterised in that** the information sent in step c) relates at least in part to the identity and/or to a bank connection of a user of the access.

6. Process according to one of Claims 1 to 5,
**characterised in that** in step c) the information is requested in a dialogue between the control station (SCP) and the terminal device (SMT) or, to be more precise, a user of the terminal device (SMT).

7. Process according to one of Claims 1 to 6,
**characterised in that** step b) is triggered by the input of an arbitrary call number on the terminal device (SMT).

8. Process according to one of Claims 1 to 7,
**characterised in that** a call number is assigned to the access and said call number is indicated via the terminal device (SMT).

9. Process according to one of Claims 1 to 8,
**characterised in that** step a) takes place using information specific to the terminal device (SMT) or to the user identification module (SIM) and is carried out by the operator of the telecommunications network or by the manufacturer or supplier of the terminal device (SMT) or of the user identification module.

10. Process according to one of Claims 1 to 9,
**characterised in that** in step a) the terminal device (SMT) or the user identification module (SIM) is enabled exclusively for outgoing calls from the terminal device.

11. Process according to one of Claims 1 to 10,
**characterised in that** the information between the control station (SCP) and the terminal device (SMT) is exchanged at least in part via a signalling channel of the connection.

## Revendications

1. Procédé pour autoriser une connexion de terminal d'un réseau de télécommunication (PLMN) qui comporte une station de commande (SCP) pour la mise en oeuvre de services de gestion, dans lequel
a) la connexion dans le réseau de télécommunication (PLMN) est fournie pour l'autorisation, et
b) l'enregistrement qui appartient à la connexion est marqué dans l'enregistreur de localisation nominal (HLR), et
c) un terminal mobile (SMT) reçoit par l'intermédiaire de la connexion avec le réseau de télécommunication (PLMN), commandé par l'enregistreur de localisation nominal (HLR), une liaison vers la station de commande (SCP), et
d) des informations qui sont nécessaires à l'autorisation de la connexion ainsi qu'à la gestion future de la connexion de la part du réseau de télécommunication sont émises pour la demande de la connexion vers la station de commande (SCP) au moyen du terminal mobile (SMT),
dans lequel
e) la station de commande vérifie les informations entrées relativement à la solvabilité auprès d'une base de données (BIN) située en dehors du réseau de télécommunication (PLMN), et
f) le marquage de l'enregistrement qui appartient à la connexion dans l'enregistreur de localisation nominal (HLR) est enlevé, et
g) la station de commande (SCP) effectue ensuite le traitement de la demande en fonction du résultat de la vérification,
**caractérisé par le fait que**
avant que l'abonné acquiert le terminal mobile (SMT) et une carte SIM, la connexion dans le réseau GSM est créée par le vendeur de stations mobiles et l'enregistreur de localisation nominal (HLR) ordonne à un centre de commutation (MSC) de dévier des appels partant du terminal mobile (SMT) vers la station de commande (SCP) du réseau GSM.

2. Procédé selon la revendication 1,
**caractérisé par le fait que** le réseau de télécommunication (PLMN) est conçu comme un réseau de radiotéléphonie mobile et la connexion est conçue comme une possibilité de liaison par l'intermédiaire d'une voie radioélectrique du réseau de radiotéléphonie mobile.

3. Procédé selon la revendication 1 ou 2,
**caractérisé par le fait que** des informations spécifiques à la connexion et contenues dans une identification d'utilisateur (SIM) associée au terminal (SMT) sont émises.

4. Procédé selon l'une des revendications 1 à 3,
**caractérisé par le fait que** les informations émises à l'étape c) sont au moins partiellement codées pour la transmission.

5. Procédé selon l'une des revendications 1 à 4,
**caractérisé par le fait que** les informations émises à l'étape c) se rapportent au moins partiellement à l'identité et/ou à des coordonnées bancaires d'un utilisateur de la connexion.

6. Procédé selon l'une des revendications 1 à 5,
**caractérisé par le fait que**, à l'étape c), les informations sont demandées lors d'un dialogue entre la station de commande (SCP) et le terminal (SMT) c'est-à-dire un utilisateur du terminal (SMT).

7. Procédé selon l'une des revendications 1 à 6,
**caractérisé par le fait que** l'étape b) est déclenchée par l'entrée d'un numéro d'appel quelconque sur le terminal (SMT).

8. Procédé selon l'une des revendications 1 à 7,
**caractérisé par le fait qu'**un numéro d'appel est associé à la connexion et qu'il est indiqué par l'intermédiaire du terminal (SMT).

9. Procédé selon l'une des revendications 1 à 8,
**caractérisé par le fait que** l'étape a) s'effectue en utilisant des informations spécifiques au terminal (SMT) c'est-à-dire à l'identification d'utilisateur (SIM) et qu'elle est mise en oeuvre par l'exploitant du réseau de télécommunication ou par le fabricant ou le fournisseur du terminal (SMT) c'est-à-dire de l'identification d'utilisateur.

10. Procédé selon l'une des revendications 1 à 9,
**caractérisé par le fait que**, à l'étape a), le terminal (SMT) c'est-à-dire l'identification d'utilisateur (SIM) est validé exclusivement pour des appels partant du terminal.

11. Procédé selon l'une des revendications 1 à 10,
**caractérisé par le fait que** les informations entre la station de commande (SCP) et le terminal (SMT) sont échangées au moins partiellement par l'intermédiaire d'un canal de signalisation de la liaison.
